# EUROPEAN PATENT SPECIFICATION

(11) **EP 0 532 068 B1**
(45) Date of publication and mention of the grant of the patent: **19.06.1996**
(21) Application number: 92202194.4
(22) Date of filing: 17.07.1992
(51) Int. Cl.: A01D 34/70, A01D 34/68

(54) **Grass-mowing tractor for the maintenance of grass lawns**
Rasentraktor zur Behandlung von Rasen
Tracteur-tondeuse pour l'entretien de gazons

(30) Priority: 31.07.1991 IT MI912135
(43) Date of publication of application: 17.03.1993
(73) Proprietor: CASTELGARDEN S.P.A., I-31033 Castelfranco Veneto (Treviso ) (IT)
(72) Inventor: Ferrari, Maurizio, I-20144 Milano (IT)
(74) Representative: Mittler, Enrico

(56) References cited:
- EP-A- 0 254 657
- FR-A- 2 166 009
- US-A- 3 969 876
- US-A- 4 878 339

## Description

The present invention relates to a grass-mowing tractor for the maintenance of grass lawns, with a cutting plate having two counter-rotating blades and direct collection discharging to the rear and in the middle.

Tractors are known for mowing grass which comprise a frame, with which there are associated steering and driving wheels, an engine, a system for the transmission of motion from the engine to the driving wheels comprising a gearbox and a differential, a cutting plate with one or more blades discharging directly to one side or in the middle and possibly a container for collecting the mowed grass.

In particular there are grass-mowing tractors on the market, which are constructed according to EP-A-0 254 657 and have a cutting plate with two counter-rotating blades and a direct discharge conveyor at the rear and in the middle; in these tractors a container for the mowed grass is arranged between the rear driving wheels, and the system for the transmission of motion from the engine to the driving wheels comprises a single gearbox-differential unit positioned above the cutting plate.

These tractors are somewhat bulky and expensive, because the arrangement of the different components involves an increase in the wheelbase, in the track and in the height of the chassis and complex organs are necessary for the transmission of motion from the differential to the driving wheels; in addition to which, the container for the mowed grass has a tapered shape with a discharge mouth having a limited size, so that the periodic emptying of the container itself is somewhat complicated.

Grass-mowing tractors according to US-A-3 969 876 are also in widespread use that have a one-blade cutting plate and a direct discharge conveyor at the rear and at one side; in these tractors the system for the transmission of motion consists of a separate gearbox and differential, arranged in the space left free by the conveyor, arranged at one side of the chassis.

In these tractors the shape of the conveyor is penalized by the arrangement at one side and the cutting width of the plate having one blade cannot be higher than a given value, 65-70 cm, due to problems of noise and to avoid increases in the tractor's wheelbase and track.

The object of the present invention is a grass-mowing tractor for the maintenance of grass lawns that does not have the drawbacks of known tractors and is on the contrary optimized as regards performance, costs and size.

According to this object the tractor according to the invention has the construction defined in Claim 1.

With the porposed solution an efficient, reliable, strong and particularly handy tractor is accomplished, with a limited size and a low cost.

Features and advantages of the invention shall now be illustrated with reference to an embodiment, represented as non-limiting example in the enclosed drawings, wherein:
Fig. 1 is a side view of a grass-mowing tractor accomplished according to the invention;
Fig. 2 is a top plan view, partially sectioned, of the tractor of Fig. 1;
Fig. 3 is view in an enlarged scale, partially sectioned, taken along the line III-III of Fig. 1.

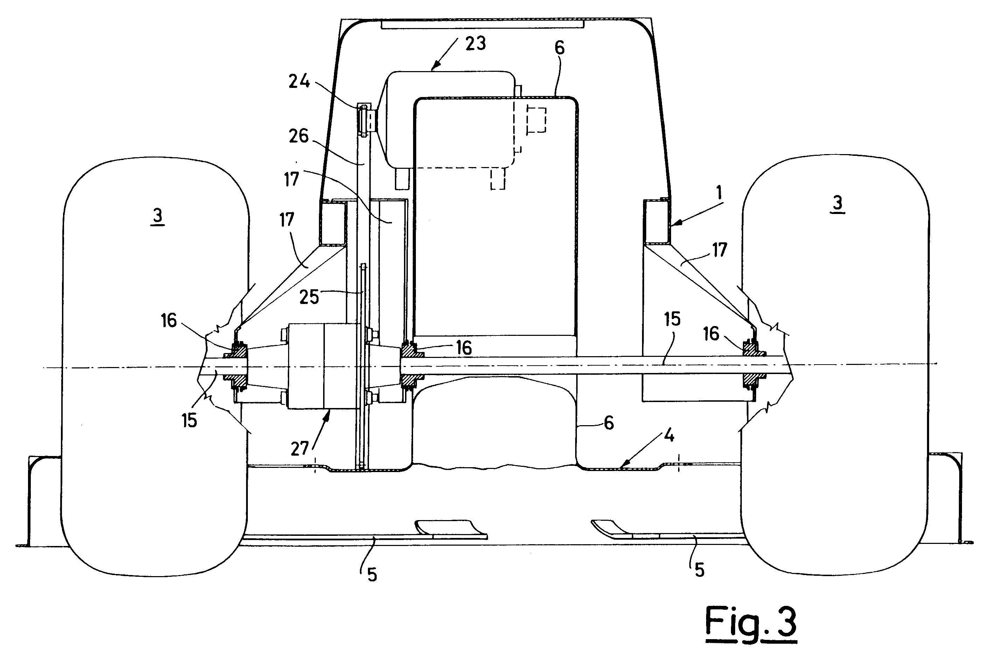

There is indicated as a whole with 1 in the figures a chassis of a grass-mowing tractor for the maintenance of grass lawns, accomplished according to the invention; there are indicated with 2 two front steering wheels and with 3 two rear driving wheels, whose axle shafts 15 are rotatably supported by bearings 16 in brackets 17 of the chassis 1, as shown in Fig. 3; there is indicated as a whole with 4 a cutting plate having two counter-rotating blades 5, visible in Fig.s 2 and 3, there is indicated with 6 a conveyor for the expulsion of the mowed grass and there is indicated with 7 a container, or bag, for collecting said mowed grass, arranged behind the driving wheels 3.

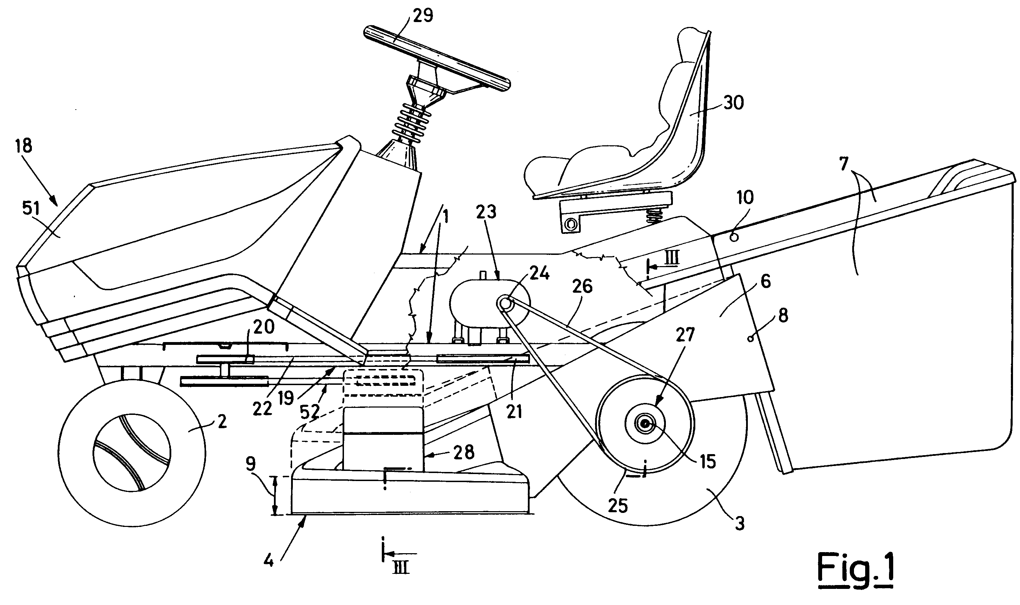

The cutting plate 4 is constrained to the chassis 1 by adjustments means, not shown, being known, which allow the variation of the position of the same cutting plate 4 with respect to the ground, in relation to the height of the grass to be mowed; there is represented in Fig. 1 with dotted lines the highest position that the plate 4 can assume and there is indicated with 9 its upward stroke with respect to its lowest position, represented with a continuous line; in a similar manner there is represented the corresponding position of the conveyor 6, that is hinged at 8 to the chassis 1. The container 7 is finally hinged at 10 to the chassis 1 and is also simply placed near the exit from the conveyor 6 so that it can be released or made to rotate with respect to the chassis 1 when the mowed grass is emptied.

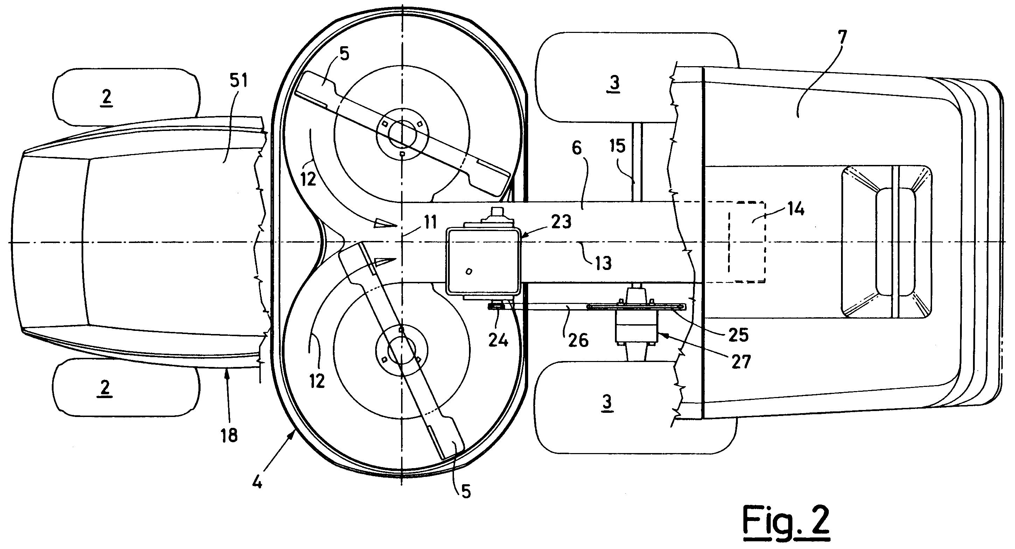

The conveyor 6 is of the direct-collection type discharging to the rear and in the middle, with respect to the cutting plate 4 and to the container 7; the conveyor 6 in fact has the inlet mouth 11 located at the confluence of the flows of mowed grass generated by the counter-rotating blades 5, indicated through the arrows 12 of Fig. 2, and is arranged in the centre-line of the chassis, directed according to a longitudinal axis 13, across the axis 15 of the driving wheels, so that its discharge mouth 14 is in a middle area of the container 7.

There is indicated with 18 an engine unit, essentially formed by a usual internal-combustion engine, not shown as it is well-known, covered by a bonnet 51; there is indicated as a whole with 19 a system for the transmission of motion, comprising pulleys 20 and 21, with which there is engaged a belt 22 for the transmission of motion from the engine to a gearbox, indicated as a whole with 23, and toothed-wheels 24 and 25, with which there engages a chain 26 for the transmission of motion from the gearbox 23 to a differential, indicated as a whole with 27; the gearbox 23 is positioned substantially above said cutting plate 4 and said differential 27 is arranged on the axis of the driving wheels, at one side of the conveyor 6; the chain 26 extends along the side of the chassis 1, at one side of the conveyor 6 (Fig.s 2 and 3).

There is indicated as a whole with 28 a transmission unit that causes the rotation of the counter-rotating blades 5 and takes the motion from the internal-combustion engine through a further belt transmission 52 and a coupling that may be removed at will, not shown, as it is well-known.

There is indicated with 29 a steering wheel, forming part of a steering device, not shown, of the front wheels 2, and there is indicated wth 30 a seat for the driver constrained to the chassis 1.

The arrangement proposed for the conveyor 6, the container 7, the gearbox 23, the differential 27 and for the transmission belt 22 allows the accomplishment of a tractor with a limited cost and that is particularly compact, with a very small wheelbase, track, height of chassis and overall size, and thus especially handy. Other advantages accrue from being able to fit a conveyor 6 having an optimum shape for the effective expulsion of the mowed grass and a very capacious collection container 7, that can be provided with a wide opening for emptying. Moreover, the transmission system adopted, with gearbox 23 and differential 27 connected by a chain, is efficient and reliable.

## Claims

1. Grass-mowing tractor for the maintenance of grass lawns, comprising a chassis (1) and provided with front steering wheels (2) and with rear driving wheels (3) having a common axle (15), an engine (18), a motion transmission system (19) including a gearbox (23), a differential (27) and motion transmission means (24-26) for connecting said gearbox (23) with said diffferential (27), a cutting plate (4) provided with grass mowing means (5), a conveyor (6) for discharging the mowed grass rearwards from the cutting plate (4), and a container (7) for collecting the mowed grass arranged behind the driving wheels (3), said gearbox (23) being positioned above the cutting plate (4), said differential (27) being arranged coaxially with the axle (15) of the driving wheels (3) and both the differential and said motion transmission means (24-26) are arranged at one side of said conveyor (6), characterized in that said grass mowing means comprise two counter-rotating blades (5) and said conveyor (6) is arranged substantially along a longitudinal centre line (13) of the chassis (1) as viewed from above and passes over the common axle (15) of the driving wheels (3).

2. Tractor according to claim 1, characterised in that said motion transmission means (24, 25, 26) comprise two toothed wheels (24, 25) operationally connected to said gearbox (23) and to said differential (27), respectively and a chain (26) engaging said toothed wheels (24, 25).

## Patentansprüche

1. Grasmähtraktor zur Behandlung von Rasen, mit einem Chassis (1), das mit vorderen Steuerrädern (2) und hinteren Antriebsrädern (3) mit einer gemeinsamen Achse (5) versehen ist, einem Motor (18), einem Bewegungsübertragungssystem (19) einschließlich einem Getriebe (23), einem Differential (27) und Bewegungsübertragungsmitteln (24 - 26) zum Verbinden des Getriebes (23) mit dem Differential (27), einer Schneideplatte (4) mit Grasmähmitteln (5), einem Förderer (6) zum Auswerfen des gemähten Grases hinter der Schneideplatte (4) und einem Behälter (7) zum Sammeln des gemähten Grases, der hinter den Antriebsrädern (3) angeordnet ist, wobei das Getriebe (23) über der Schneideplatte (4) angeordnet ist, das Differential (27) koaxial mit der Achse (15) der Antriebsräder (3) angeordnet ist und sowohl das Differential als auch die Bewegungsübertragungsmittel (24 - 26) an einer Seite des Förderers (6) angeordnet sind,
dadurch gekennzeichnet, daß die Grasmähmittel zwei gegeneinander rotierende Klingen (5) aufweisen und der Förderer (6) im wesentlichen entlang einer Längsmittellinie (13) des Chassis (1) von oben gesehen angeordnet ist und über die gemeinsame Achse (15) der Antriebsräder (3) geht.

2. Traktor nach Anspruch 1, dadurch gekennzeichnet, daß die Bewegungsübertragungsmittel (24, 25, 26) zwei Zahnräder (24, 25), die betriebsmäßig mit dem Getriebe (23) bzw. dem Differential (27) verbunden sind, und eine Kette (26), die mit den Zahnrädern (24, 25) in Eingriff steht, aufweisen.

## Revendications

1. Tracteur de tonte d'herbe destiné à l'entretien des gazons, comprenant un châssis (1) et ayant des roues avant directrices (2) et des roues arrière motrices (3) possédant un essieu commun (15), un moteur (18), un système (18) de transmission de mouvement comprenant une boîte de vitesses (23), un différentiel (27) et un dispositif de transmission de mouvement (24-26) destiné à raccorder la boîte de vitesses (23) au différentiel (27), une plaque (4) de coupe comprenant le dispositif (5) de tonte destiné à couper l'herbe, un transporteur (6) d'évacuation de l'herbe coupée vers l'arrière de la plaque de coupe (4), et un récipient (7) destiné à collecter l'herbe tondue et placé derrière les roues motrices (3), la boîte de vitesses (23) est placée audessus de la plaque de coupe (4), le différentiel (27) est placé coaxialement à l'essieu (15) des roues motrices (3), et le différentiel et le dispositif de transmission de mouvement (24-26) sont disposés d'un premier côté du transporteur (6), caractérisé en ce que le dispositif de tonte destiné à couper l'herbe comporte deux lames (5) tournant en sens inverses, et le transporteur (6) est placé pratiquement le long de l'axe longitudinal central (13) du châssis (1), en vue de dessus, et passe au-dessus de l'essieu commun (15) des roues motrices (3).

2. Tracteur selon la revendication 1, caractérisé en ce que le dispositif (24, 25, 26) de transmission de mouvement comporte deux roues dentées (24, 25) raccordées pendant le fonctionnement à la boîte de vitesses (23) et au différentiel (27) respectivement, et une chaîne (26) coopérant avec les roues dentées (24, 25).
